# EUROPEAN PATENT APPLICATION

(11) **EP 4 618 212 A1**
(43) Date of publication of application: **17.09.2025**
(21) Application number: 25162269.2
(22) Date of filing: 07.03.2025
(51) Int. Cl.: H01M 10/04, H01M 10/0583, H01M 10/0585, H01M 50/466

(54) **ELECTRODE ASSEMBLY**

(30) Priority: 13.03.2024 KR 20240035376
(71) Applicant: SAMSUNG SDI CO., LTD., Yongin-si, Gyeonggi-do 17084 (KR)
(72) Inventor: Kang, Minjung, Yongin-si, Gyeonggi-do 17084 (KR)
(74) Representative: Michalski Hüttermann & Partner Patentanwälte mbB

(57) **Abstract**

An electrode assembly includes a stack of positive electrodes; a pair of separators on respective sides of each positive electrode of the stack of positive electrodes; and at least one negative electrode in a band form, the at least one negative electrode being repeatedly bent around the separators and the stack of positive electrodes.

## Description

### BACKGROUND

### 1. Field

Embodiments relate to an electrode assembly.

### 2. Description of the Related Art

As technical developments and demands on mobile devices increase, demands on rechargeable batteries as energy sources are steeply increasing.

A rechargeable battery may be manufactured by putting an electrode assembly formed by arranging electrode on respective sides of a separator and winding the same in a jelly roll form or an electrode assembly formed by stacking an electrode and a separator in a sheet shape into a case with an electrolyte solution, and sealing the case with a cap assembly.

### SUMMARY

The embodiments may be realized by providing an electrode assembly including a stack of positive electrodes; a pair of separators on respective sides of each positive electrode of the stack of positive electrodes; and at least one negative electrode in a band form, the at least one negative electrode being repeatedly bent around the separators and the stack of positive electrodes.

The positive electrodes and the separators may each have a sheet shape.

The at least one negative electrode may be repeatedly bent in a first direction in which first surfaces thereof face each other and a second direction in which second surfaces thereof face each other.

The at least one negative electrode may include a substrate and negative active material layers on the substrate, and the substrate may be repeatedly bent.

Each positive electrode of the stack of positive electrodes may include a first positive active material layer, and the negative active material layers may overlap the first positive active material layers.

Each separator may have an area that is larger than an area of each positive electrode of the stack of positive electrodes.

Edges of the separators may be coalesced to each other.

The at least one negative electrode may include a first negative electrode and a second negative electrode overlapping each other and bent, and the electrode assembly may further include a first band-type separator, a band-type positive electrode, and a second band-type separator between the first negative electrode and the second negative electrode and bent with the first negative electrode and the second negative electrode.

The band-type positive electrode may include a substrate and second positive active material layers on the substrate of the band-type positive electrode and at regular intervals, and the substrate of the band-type positive electrode between the second positive active material layers may be bent.

The electrode assembly may further include a pair of external positive electrodes respectively overlapping an outermost surface of the bent negative electrode, and external separators on respective sides of each external positive electrode of the pair of external positive electrodes.

Each positive electrode of the stack of positive electrodes and each separator may be bent once around and covering one bent portion of the at least one negative electrode on sides of the electrode assembly.

### BRIEF DESCRIPTION OF THE DRAWINGS

Features will be apparent to those of skill in the art by describing in detail exemplary embodiments with reference to the attached drawings in which:
FIG. 1 shows a cross-sectional view of an electrode assembly according to an embodiment.
FIG. 2 shows an unfolded electrode assembly of FIG. 1.
FIG. 3 and FIG. 4 show cross-sectional views of an electrode assembly according to other embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. In addition, it will also be understood that when a layer is referred to as being "between" two layers, it can be the only layer between the two layers, or one or more intervening layers may also be present. Like reference numerals refer to like elements throughout. As used herein, the term "or" is not necessarily an exclusive term, e.g., "A or B" would include A, B, or A and B.

Unless explicitly described to the contrary, the word "comprise" and variations such as "comprises," "includes," "including," or "comprising", will be understood to imply the inclusion of stated elements but not the exclusion of any other elements.

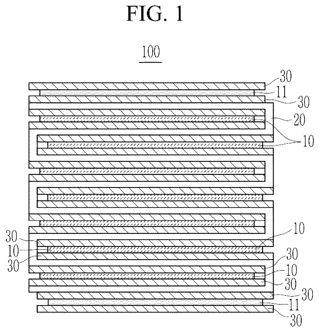

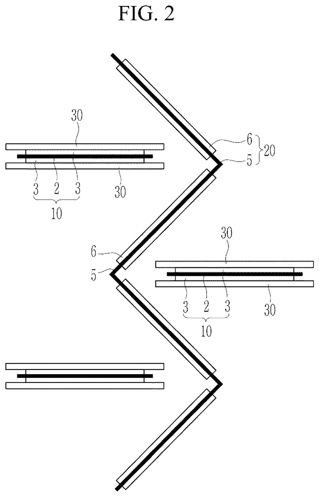

FIG. 1 shows a cross-sectional view of an electrode assembly according to an embodiment, and FIG. 2 shows an unfolded electrode assembly of FIG. 1.

As shown in FIG. 1 and FIG. 2, the electrode assembly 100 may include a positive electrode 10, a negative electrode 20, and a separator 30, which may be alternately stacked.

The positive electrodes 10 and the separators 30 may each have sheet shapes and may be stacked. The separator 30 may be on respective (e.g., opposite) sides of the positive electrode 10.

The positive electrode 10 may be made of or include a thin conductive metal plate, e.g., may include a substrate 2 used as a current collector and a positive active material layer 3, and the substrate 2 may be made of aluminum.

A compound (e.g., a lithiated intercalation compound) for allowing a reversible intercalation and deintercalation of lithium may be used as the positive active material forming the positive active material layer 3. In an implementation, a composite oxide of a metal, e.g., cobalt, manganese, nickel, or combinations thereof, and lithium may be used.

A content of the positive active material may be 90 wt% to 98 wt%, based on a total weight of the positive active material layer.

The positive active material layer 3 may further include a binder and a conductive material. The contents of the binder and the conductive material may each independently be 1 wt% to 5 wt%, based on the total weight of the positive active material layer.

The binder may help attach the positive active material particles to each other, and may help attach the positive active material to the substrate that is a current collector. In an implementation, the binder may include, e.g., polyvinylalcohol, carboxylmethylcellulose, hydroxypropylcellulose, deacetylcellulose, polyvinylchloride, carboxylated polyvinyl chloride, polyvinylfluoride, ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, epoxy resin, or nylon. The conductive material may provide conductivity to the electrode, and suitable materials may be usable if they generate no chemical changes and they may be electron conductive materials, regarding the configured batteries.

The separator 30 may be a polymer film that may allow lithium ions to pass therethrough. In an implementation, polyethylene, polypropylene, polyvinylidene fluoride, or a multifilm of two or more layers thereof may be used as the separator. In an implementation, a mixed multifilm such as a polyethylene/polypropylene double-layered separator, a polyethylene/polypropylene/polyethylene triple-layered separator, or a polypropylene/polyethylene/polypropylene triple-layered separator may be used as the separator.

The separator 30 may be larger (e.g., in area) than the positive electrode 10, and an edge of the separator 30 may be coalesced or merged to form a space for receiving or accommodating the positive electrode 10. The positive electrode 10 may be covered on or by the separator, except that a positive electrode tab may protrude from or outside of the separator.

The negative electrode 20 may be in a band form and may be repeatedly bent in a direction covering the separator and the positive electrode. **In** an implementation, the negative electrode 20 may be repeatedly bent in a first direction in which surfaces face each other and a second direction in which other surfaces face each other to have a zigzag form.

The negative electrode 20 may include a substrate 5 and negative active material layers 6 on the substrate 5 . The substrate 5 of the negative electrode 20 may be repeatedly bent. The negative active material layers 6 may overlap the positive active material layers 3 of the positive electrode 10 (e.g., once the electrode assembly is assembled).

The substrate 5 of the negative electrode 20 may include a thin conductive metal plate and may be used as a current collector. In an implementation, the substrate may be made of copper.

The negative active material of the negative active material layer 6 may include a carbon active material. The carbon negative active material may include artificial graphite or a mixture of artificial graphite and natural graphite. In an implementation, the artificial graphite or a crystalline carbon material that is a mixture of artificial graphite and natural graphite may be used as the negative active material, and a crystalline characteristic of particles may be further developed compared to using an amorphous carbon active material, thereby further increasing an alignment characteristic of the carbon material in a polar plate on an external magnetic field, which is a merit. Shapes of the artificial graphite or the natural graphite may include an amorphous shape, a plate shape, a flake shape, a spherical shape, a fiber shape, and combinations thereof, and any types of other suitable shapes. In an implementation, the artificial graphite and the natural graphite may be mixed and used, and its mixture ratio may be 70:30 to 95:5 by weight.

In an implementation, the negative active material layer may further include a Si negative active material, a Sn negative active material, or an LiMOx (M =metal) negative active material. In an implementation, the negative active material layer may further include the additional negative active materials described above, e.g., it may include the carbon negative active material as the first negative active material and the negative active material as the second negative active material, and the mixture ratio of the first negative active material to the second negative active material may be 50:50 to 99:1 by weight.

The LiMOx (M =metal) negative active material may be a lithium vanadium oxide.

The Si negative active material may include Si, a Si-C composite, a SiOₓ (0 < x ≤ 2, e.g., SiO₂), or a Si-Q alloy (in which Q is an alkali metal, an alkaline-earth metal, a Group 13 element, a Group 14 element, a Group 15 element, a Group 16 element, a transition metal, a rare earth element, or combinations thereof, and is not Si), and the Sn negative active material may include Sn, a SnO₂, or a Sn-R alloy (in which R is an alkali metal, an alkaline-earth metal, a Group 13 element, a Group 14 element, a Group 15 element, a Group 16 element, a transition metal, a rare earth element, or combinations thereof, and is not Sn). In an implementation, at least one of them and the SiO₂ may be mixed and used. The elements Q and R may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or combinations thereof.

The content of the negative active material on the negative active material layer 6 may be 95 wt% to 99 wt%, based on the total weight of the negative active material layer 6.

In an implementation, the negative active material may include a binder and may further include a conductive material. The content of the binder in the negative active material may be 1 wt% to 5 wt%, based on the total weight of the negative active material. In an implementation, the conductive material may be further included, and 90 wt% to 98 wt% of the negative active material, 1 wt% to 5 wt% of the binder, and 1 wt% to 5 wt% of the conductive material may be used.

The binder may help attach the negative active material particles to each other, and may help attach the negative active material to the negative electrode substrate. A nonaqueous binder, an aqueous binder, or a combination thereof may be used as the binder.

The nonaqueous binder may include polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or combinations thereof.

The aqueous binder may include styrene-butadiene rubber, acrylated styrene-butadiene rubber (SBR), acrylonitrile-butadiene rubber, acryl rubber, butyl rubber, ethylenepropyleneco polymer, polyepichlorohydrin, polyphosphazene, polyacrylonitrile, polystyrene, ethylenepropylene diene copolymer, polyvinylpyridine, chlorosulfonated polyethylene, latex, polyester resin, acryl resin, phenol resin, epoxy resin, polyvinyl alcohol, acrylate-based resin, or combinations thereof.

In an implementation, the aqueous binder may be used as the negative electrode binder, and a cellulose compound for providing viscosity may be further included as a thickener. In an implementation, carboxylmethyl cellulose, hydroxypropylmethyl cellulose, methyl cellulose, or alkali metal salt thereof may be mixed and used as the cellulose compound. Na, K or Li may be used as the alkali metal. The content of using the thickener may be 0.1 parts by weight to 3 parts by weight, based on 100 parts by weight of the negative active material.

The conductive material may provide conductivity to the electrode, and any types of suitable electron conductive materials generating no chemical changes may be usable for the configured battery. In an implementation, the conductive material may include carbon materials including natural graphite, artificial graphite, carbon black, acetylene black, Ketjen black, or carbon fiber; metal materials such as metal powder or metal fiber including copper, nickel, aluminum, and silver; conductive polymers including a polyphenylene derivative; or conductive materials including mixtures thereof.

A BET specific surface area of the negative active material layer may be less than 3.0 m²/g, e.g., 0.6 m²/g to 1.2 m²/g. Maintaining the BET specific surface area of the negative active material layer at less than 3.0 m²/g, an electrochemical lifespan characteristic of cells may increase as a merit.

The BET may be measured by charging and discharging the lithium rechargeable battery including the negative electrode, disassembling the completely discharged battery to obtain a negative electrode, cutting the negative electrode by a predetermined size, putting the cut negative electrodes into a BET sample holder, and applying a nitrogen gas adsorption method thereto.

The negative electrode may have a cross-section loading level (L/L) of 6 mg/cm² to 65 mg/cm².

Referring to FIG. 1, the electrode assembly 100 may further include a pair of external positive electrode 11 respectively overlapping or on an outermost surface of the bent negative electrode 20, in addition to the bent negative electrode 20 and the internal positive electrodes 10. The electrode assembly 100 may further include external separators on respective sides of each external positive electrode 11 of the pair of external positive electrodes 11.

In an implementation, the external positive electrode 11 may be further included, and charge capacity of the electrode assembly may be increased by the added positive electrode. A negative active material layer may be on or at a surface of the negative electrode facing the external positive electrode 11.

The electrode assembly 100 may be received or accommodated in an angular case in a pouch or can shape together with the electrolyte, and may be used as the rechargeable battery.

The electrolyte may include a non-aqueous organic solvent and a lithium salt. The non-aqueous organic solvent may function as a medium by which ions relating to an electrochemical reaction of the battery move.

The lithium salt may be dissolved in the organic solvent, it may function as a source for supplying lithium ions in the battery to enable a basic operation of the lithium secondary battery, and it may promote movement of lithium ions between the positive electrode and the negative electrode. Examples of the lithium salt may include LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CxF₂ₓ₊₁SO₂)(CyF_{2y+1}SO₂ (in which x and y are natural numbers, e.g., integers of 1 to 20), LiCl, LiI, and LiB(C₂O₄)₂ (lithium bis(oxalato) borate: LiBOB) as a supporting electrolytic salt.

A concentration of the lithium salt may be in a range of 0.1 M to 2.0 M. Including the lithium salt at the above concentration range may help ensure that an electrolyte may have excellent performance and lithium ion mobility due to optimal electrolyte conductivity and viscosity.

The negative electrode may be repeatedly bent to be formed in the embodiment so areas of the negative electrode and the positive electrode of the rechargeable battery may be increased and the capacity of the rechargeable battery may be increased.

If the positive electrode were to also be repeatedly bent, the negative active material layer may be formed on a portion where the positive electrode is bent so that the positive electrode may face the negative electrode, and the negative electrode (that is bigger than the positive electrode) may be bent and there may not be a change of capacity if the positive active material is not formed on the bent portion.

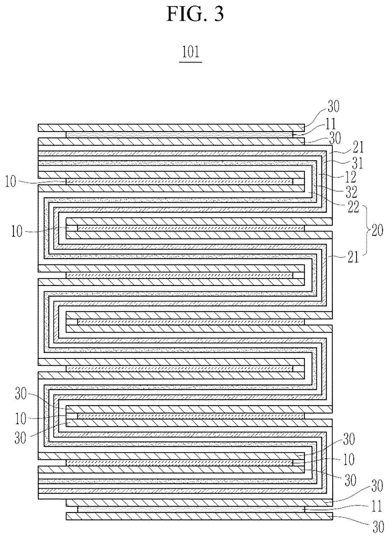

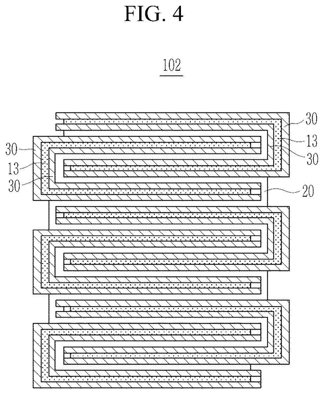

FIG. 3 and FIG. 4 show cross-sectional views of an electrode assembly according to another embodiment.

The electrode assembly shown in FIG. 3 and FIG. 4 mostly corresponds to the electrode assembly shown in FIG. 1 so differences will now be described in detail.

As shown in FIG. 3, the electrode assembly 101 according to another embodiment may include stacked positive electrodes 10, a pair of separators 30 on respective sides of the positive electrode 10, and a band-type negative electrode 20 repeatedly bent with respect to the positive electrode 10 and the separator 30. An external positive electrode 11 and a separator 30 overlapping the external positive electrode 11 may be on or at the outermost portion of the electrode assembly.

The negative electrode 20 may include a first negative electrode 21 and a second negative electrode 22 overlapping to be bent together. A first band-type separator 31, a band-type positive electrode 12, and a second band-type separator 32 may be included between the first negative electrode 21 and the second negative electrode 22. The first band-type separator 31, band-type positive electrode 12, and second band-type separator 32 may overlap the first negative electrode 21 and the second negative electrode 22. The first band-type separator 31, band-type positive electrode 12, and second band-type separator 32 may be bent with the first negative electrode 21 and the second negative electrode 22.

The band-type positive electrode 12 may comprise a substrate and positive active material layers on the substrate of the band-type positive electrode and at regular intervals. The substrates of the band-type positive electrode 12 (e.g., the substrates between the positive active material layers) may be repeatedly bent like the negative electrode 20, and the positive active material layers may be formed with predetermined gaps therebetween.

If the positive electrode and the negative electrode were to be formed to have a sheet form and stacked, a capacity loss could be generated at a corner of the electrode assembly because of a size difference between the positive electrode and the negative electrode. In an implementation, the positive electrode and the negative active material may be bent and attached to each other in the region in which the band-type positive electrode and the negative electrode are bent, and the bent portion may be used as capacity.

As shown in FIG. 4, the electrode assembly 102 according to another embodiment may include stacked positive electrodes 13, a pair of separators 30 on respective sides of the positive electrode 13, and a negative electrode 20 repeatedly bent in a band shape.

The positive electrodes 13 may each be bent once to cover or surround the bent portion of the negative electrode 20 at respective sides, and may have a V or U shape. The separator 30 may also be bent once together with the positive electrode 13, and it may have a band shape.

By way of summation and review, the development of electric vehicles requires a high-capacity design with high energy density and a rapid charge characteristic in order to satisfy the characteristics of the rechargeable batteries used in automobiles.

For high-capacity characteristics, capacity may be increased by increasing the size of the positive electrode and the negative electrode or increasing the quantity of the positive electrodes and the negative electrodes included in the electrode assembly.

One or more embodiments may provide an electrode assembly for maximizing capacity of a rechargeable battery.

According to the embodiment, the negative electrode substrate may be bent to be formed, the positive electrode and the separator may be arranged and attacked between the bent negative electrode, thereby maximizing the amount of the negative electrode and the positive electrode included in the electrode assembly and increasing the capacity of the rechargeable battery.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### List of reference signs:

3: positive active material layer
5: substrate
6: negative active material layer
10, 11, 12, 13: positive electrode
20, 21, 22: negative electrode
30, 31, 32: separator
100, 101, 102: electrode assembly

## Claims

1. An electrode assembly (100, 101, 102), comprising:
a stack of positive electrodes (10, 13);
a pair of separators (30) on respective sides of each positive electrode (10, 13) of the stack of positive electrodes (10, 13); and
at least one negative electrode (20) in a band form, the at least one negative electrode (20) being repeatedly bent around the separators (30) and the stack of positive electrodes (10, 13).

2. The electrode assembly (100, 101, 102) as claimed in claim 1, wherein the positive electrodes (10, 13) and the separators (30) each have a sheet shape.

3. The electrode assembly (100, 101, 102) as claimed in claims 1 or 2, wherein the at least one negative electrode (20) is repeatedly bent in a first direction in which first surfaces thereof face each other and a second direction in which second surfaces thereof face each other.

4. The electrode assembly (100) as claimed in any of claims 1 to 3, wherein:
the at least one negative electrode (20) includes a substrate (5) and negative active material layers (6) on the substrate (5), and
the substrate (5) is repeatedly bent.

5. The electrode assembly (100) as claimed in claim 4, wherein:
each positive electrode (10) of the stack of positive electrodes (10) includes a first positive active material layer (3), and
the negative active material layers (6) overlap the first positive active material layers (3).

6. The electrode assembly (100, 101, 102) as claimed in any of claims 1 to 5, wherein each separator (30) has an area that is larger than an area of each positive electrode (10, 13) of the stack of positive electrodes (10, 13).

7. The electrode assembly (100, 101, 102) as claimed in claim 6, wherein edges of the separators (30) are coalesced to each other.

8. The electrode assembly (101) as claimed in any of claims 1 to 3, 6 or 7, wherein:
the at least one negative electrode (20) includes a first negative electrode (21) and a second negative electrode (22) overlapping each other and bent, and
the electrode assembly (101) further includes a first band-type separator (31), a band-type positive electrode (12), and a second band-type separator (32) between the first negative electrode (21) and the second negative electrode (22) and bent with the first negative electrode (21) and the second negative electrode (22).

9. The electrode assembly (101) as claimed in claim 8, wherein:
the band-type positive electrode (12) includes a substrate and second positive active material layers on the substrate of the band-type positive electrode (12) and at regular intervals, and
the substrate of the band-type positive electrode (12) between the second positive active material layers is bent.

10. The electrode assembly (100, 101) as claimed in any of claims 1 to 9 , further comprising:
a pair of external positive electrodes (11) respectively overlapping an outermost surface of the bent negative electrode (20), and
external separators (30) on respective sides of each external positive electrode (11) of the pair of external positive electrodes (11).

11. The electrode assembly (102) as claimed in any of claims 1 to 3, 6, or 7, wherein each positive electrode (13) of the stack of positive electrodes (13) and each separator (30) are bent once around and covering one bent portion of the at least one negative electrode (20) on sides of the electrode assembly (102).
